# EUROPEAN PATENT APPLICATION

(11) **EP 4 760 534 A1**
(43) Date of publication of application: **17.06.2026**
(21) Application number: 25220512.5
(22) Date of filing: 03.12.2025
(51) Int. Cl.: G06F 16/3329, G06F 16/334

(54) **ARTIFICIAL INTELLIGENCE (AI) GUIDANCE SOFTWARE FOR DOCUMENT DRAFTING**

(30) Priority: 10.12.2024 US 202463730249 P
(71) Applicant: Fortrea Inc., Durham, NC 27703 (US)
(72) Inventor: Kobin, Henry Roy, Burbank, 91506 (US); Abdollahnejadbarough, Hossein, Jersey City, 07302 (US); Brown, Joan Carbonell, Carson, 90746 (US); Robertson, Zachary Clement, Simi Valley, 90365 (US); Dolan, Brian David, Los Angeles, 90042 (US)
(74) Representative: Slingsby Partners LLP

(57) **Abstract**

A method comprising: obtaining, by one or more processors, an input document chunk embedding associated with an input document chunk; accessing, by the one or more processors, a database system that includes guidance document chunks; generating, by the one or more processors, similarity scores indicating similarities between the input document chunk embedding and guidance document chunk embeddings for the guidance document chunks, wherein each of the similarity scores is computed by comparing the input document chunk embedding to a respective guidance document chunk embedding for one of the guidance document chunks; identifying, by the one or more processors, a set of similar guidance document chunks from the guidance document chunks stored in the database system, wherein the set of similar guidance document chunks are a subset of the guidance document chunks for which the similarity scores meet or exceed a predefined similarity threshold; combining, by the one or more processors, the set of similar guidance document chunks together into a merged guidance chunk; generating, by the one or more processors, an input prompt that includes the input document chunk, the merged guidance chunk, and a predefined instruction prompt; providing, by the one or more processors, the input prompt as input to a trained large language model, the trained large language model being configured to output a set of suggested improvements to the input document chunk based on the input prompt; and providing, by the one or more processors, one or more suggested improvements, from the set of suggested improvements, for display to a user in a graphical user interface along with the input document chunk.

## Description

### Cross-Reference to Related Application

This claims priority to U.S. Provisional Patent Application No. 63/730,249, titled "ARTIFICIAL INTELLIGENCE (AI) GUIDANCE SOFTWARE FOR DOCUMENT DRAFTING" and filed December 10, 2024, the entirety of which is hereby incorporated by reference herein.

### Technical Field

The present disclosure relates generally to artificial intelligence (AI). More specifically, but not by way of limitation, this disclosure relates to AI-based guidance software for document drafting.

### Background

Machine learning and artificial intelligence are revolutionizing various industries by enabling machines to learn from data and make intelligent decisions. As technology advances, new types of machine-learning models are continuously being developed and deployed to address increasingly complex tasks. Recently, large language models (LLMs) have gained significant popularity due to their ability to perform a wide range of language-related functions. An LLM is a deep learning model that can recognize, summarize, translate, predict, and generate text and other content by leveraging knowledge acquired from extensive training datasets. One prominent example of an LLM is the generative pre-trained transformer (GPT) model, which has demonstrated remarkable capabilities in natural language processing. Among the various iterations of GPT models, one popular GPT model is GPT-4 produced by OpenAI^{®} of San Francisco, California.

### Summary

A first example of the present disclosure includes a non-transitory computer-readable medium comprising program code that is executable by one or more processors for causing the one or more processors to perform operations. The operations can include obtaining an input document chunk embedding associated with an input document chunk; accessing a database system that includes guidance document chunks; and generating similarity scores indicating similarities between the input document chunk embedding and guidance document chunk embeddings for the guidance document chunks. Each of the similarity scores can be computed by comparing the input document chunk embedding to a respective guidance document chunk embedding for one of the guidance document chunks. The operations can also include identifying a set of similar guidance document chunks from the guidance document chunks stored in the database system. The set of similar guidance document chunks can be a subset of the guidance document chunks for which the similarity scores meet or exceed a predefined similarity threshold. The operations can also include combining the set of similar guidance document chunks together into a merged guidance chunk. The operations can further include generating an input prompt that includes the input document chunk, the merged guidance chunk, and a predefined instruction prompt. The operations can additionally include providing the input prompt as input to a trained large language model, the trained large language model being configured to output a set of suggested improvements to the input document chunk based on the input prompt. The operations can also include providing one or more suggested improvements, from the set of suggested improvements, for display to a user in a graphical user interface along with the input document chunk. The non-transitory computer-readable medium of the first example may be adapted using features described elsewhere herein, including but not limited to any one or more of the following.

The operations can further include receiving a guidance document; dividing the guidance document into the guidance document chunks, wherein each of the guidance document chunks may be of a predefined size; for each of the guidance document chunks, generating the respective guidance document chunk embedding using a trained embedding model; and storing the respective guidance document chunk embedding for each of the guidance document chunks in the database system.

The operations can further include receiving the guidance document in a first format; translating the guidance document into a second format, the second format being different from the first format; and dividing the reformatted guidance document into the guidance document chunks.

The operations can further include identifying a plurality of similar guidance document chunks, from the guidance document chunks stored in the database system, for which the similarity scores meet or exceed the predefined similarity threshold; ranking the plurality of similar guidance document chunks by similarity score; and selecting the set of similar guidance document chunks, from the plurality of similar guidance document chunks, based on their ranks meeting or exceeding a predefined rank threshold.

The predefined similarity threshold may be a first predefined similarity threshold, and the operations may further include: selecting a suggested improvement from among the set of suggested improvements; generating a suggested improvement embedding for the suggested improvement using a trained embedding model; determining a guidance document from which the suggested improvement was derived by the trained large language model; determining a guidance document embedding for the guidance document; generating a similarity score indicating a similarity between the suggested improvement embedding and the guidance document embedding; determining whether the similarity score meets or exceeds a second predefined similarity threshold; in response to determining that the similarity score is below the second predefined similarity threshold, removing the suggested improvement from the set of suggested improvements to produce a validated set of suggested improvements; and selecting the one or more suggested improvements to display to the user from the validated set of suggested improvements.

The operations can further include storing suggested improvements that have previously received negative feedback, along with the negative feedback.

The predefined similarity threshold may be a first predefined similarity threshold, and the operations may further include: selecting a suggested improvement from among the set of suggested improvements; generating a similarity score indicating a similarity between the suggested improvement and a prior suggested improvement output by the trained large language model, wherein the prior suggested improvement previously received negative feedback from one or more users; determining whether the similarity score meets or exceeds a second predefined similarity threshold; in response to determining that the similarity score is meets or exceeds the second predefined similarity threshold, removing the suggested improvement from the set of suggested improvements to produce a refined set of suggested improvements; and selecting the one or more suggested improvements to display to the user from the refined set of suggested improvements.

The operations can further include receiving, via the graphical user interface, feedback from the user about a suggested improvement of the one or more suggested improvements; generating a textual description of the feedback; and storing the textual description of the feedback in relation to the suggested improvement in the database system.

The merged guidance chunk may include the set of similar guidance document chunks concatenated into a single text string, wherein each pair of adjacent guidance document chunks in the single text string are separated from one another by a delimiter containing metadata about one of the adjacent guidance document chunks.

The similarity score may include one or more of: a cosine similarity, a Euclidean distance, a Manhattan distance, or a Chebyshev distance.

The operations can further include providing a document identification along with the suggested improvements, the document identification corresponding to the guidance document chunk used to derive the one or more suggested improvements.

The operations can further include assigning severities to the one or more suggested improvements.

The guidance document chunks may be of substantially equal size to one another.

A second example of the present disclosure includes a computer-implemented method of operations. The operations can include obtaining an input document chunk embedding associated with an input document chunk; accessing a database system that includes guidance document chunks; and generating similarity scores indicating similarities between the input document chunk embedding and guidance document chunk embeddings for the guidance document chunks. Each of the similarity scores can be computed by comparing the input document chunk embedding to a respective guidance document chunk embedding for one of the guidance document chunks. The operations can also include identifying a set of similar guidance document chunks from the guidance document chunks stored in the database system. The set of similar guidance document chunks can be a subset of the guidance document chunks for which the similarity scores meet or exceed a predefined similarity threshold. The operations can also include combining the set of similar guidance document chunks together into a merged guidance chunk. The operations can further include generating an input prompt that includes the input document chunk, the merged guidance chunk, and a predefined instruction prompt. The operations can additionally include providing the input prompt as input to a trained large language model, the trained large language model being configured to output a set of suggested improvements to the input document chunk based on the input prompt. The operations can also include providing one or more suggested improvements, from the set of suggested improvements, for display to a user in a graphical user interface along with the input document chunk. The operations may be implemented by one or more processors. The method of the second example may be adapted using features described elsewhere herein, including but not limited to any one or more of the following.

The method can further include: receiving a guidance document; dividing the guidance document into the guidance document chunks, wherein each of the guidance document chunks is of a predefined size; for each of the guidance document chunks, generating the respective guidance document chunk embedding using a trained embedding model; and storing the respective guidance document chunk embedding for each of the guidance document chunks in the database system.

The method can further include: receiving a guidance document in a first format; translating the guidance document into a second format, the second format being different from the first format; and dividing the reformatted guidance document into the guidance document chunks.

The method can further include: identifying a plurality of similar guidance document chunks, from the guidance document chunks stored in the database system, for which the similarity scores meet or exceed the predefined similarity threshold; ranking the plurality of similar guidance document chunks by similarity score; and selecting the set of similar guidance document chunks, from the plurality of similar guidance document chunks, based on their ranks meeting or exceeding a predefined rank threshold.

The predefined similarity threshold may be a first predefined similarity threshold, and further comprising: selecting a suggested improvement from among the set of suggested improvements; generating a suggested improvement embedding for the suggested improvement using a trained embedding model; determining a guidance document from which the suggested improvement was derived by the trained large language model; determining a guidance document embedding for the guidance document; generating a similarity score indicating a similarity between the suggested improvement embedding and the guidance document embedding; determining whether the similarity score meets or exceeds a second predefined similarity threshold; in response to determining that the similarity score is below the second predefined similarity threshold, removing the suggested improvement from the set of suggested improvements to produce a validated set of suggested improvements; and selecting the one or more suggested improvements to display to the user from the validated set of suggested improvements.

The method can further include storing suggested improvements that have previously received negative feedback, along with the negative feedback.

The predefined similarity threshold may be a first predefined similarity threshold, and further comprising: selecting a suggested improvement from among the set of suggested improvements; generating a similarity score indicating a similarity between the suggested improvement and a prior suggested improvement output by the trained large language model, wherein the prior suggested improvement previously received negative feedback from one or more users; determining whether the similarity score meets or exceeds a second predefined similarity threshold; in response to determining that the similarity score is meets or exceeds the second predefined similarity threshold, removing the suggested improvement from the set of suggested improvements to produce a refined set of suggested improvements; and selecting the one or more suggested improvements to display to the user from the refined set of suggested improvements.

The method can further include receiving, via the graphical user interface, feedback from the user about a suggested improvement of the one or more suggested improvements; generating a textual description of the feedback; and storing the textual description of the feedback in relation to the suggested improvement in the database system.

The merged guidance chunk may include the set of similar guidance document chunks concatenated into a single text string, wherein each pair of adjacent guidance document chunks in the single text string are separated from one another by a delimiter containing metadata about one of the adjacent guidance document chunks.

The similarity score may include one or more of: a cosine similarity, a Euclidean distance, a Manhattan distance, or a Chebyshev distance.

The method can further include providing a document identification along with the suggested improvements, the document identification corresponding to the guidance document chunk used to derive the one or more suggested improvements.

The method can further include assigning severities to the one or more suggested improvements.

The guidance document chunks may be of substantially equal size to one another.

A third example of the present disclosure includes a system comprising one or more processors and one or more memories. The one or more memories can store instructions that are executable by the one or more processors for causing the one or more processors to perform operations. The operations can include obtaining an input document chunk embedding associated with an input document chunk; accessing a database system that includes guidance document chunks; and generating similarity scores indicating similarities between the input document chunk embedding and guidance document chunk embeddings for the guidance document chunks. Each of the similarity scores can be computed by comparing the input document chunk embedding to a respective guidance document chunk embedding for one of the guidance document chunks. The operations can also include identifying a set of similar guidance document chunks from the guidance document chunks stored in the database system. The set of similar guidance document chunks can be a subset of the guidance document chunks for which the similarity scores meet or exceed a predefined similarity threshold. The operations can also include combining the set of similar guidance document chunks together into a merged guidance chunk. The operations can further include generating an input prompt that includes the input document chunk, the merged guidance chunk, and a predefined instruction prompt. The operations can additionally include providing the input prompt as input to a trained large language model, the trained large language model being configured to output a set of suggested improvements to the input document chunk based on the input prompt. The operations can also include providing one or more suggested improvements, from the set of suggested improvements, for display to a user in a graphical user interface along with the input document chunk. The system of the third example may be adapted using features described elsewhere herein, including but not limited to any one or more of the following.

The operations can further include receiving a guidance document; dividing the guidance document into the guidance document chunks, wherein each of the guidance document chunks may be of a predefined size; for each of the guidance document chunks, generating the respective guidance document chunk embedding using a trained embedding model; and storing the respective guidance document chunk embedding for each of the guidance document chunks in the database system.

The operations can further include receiving the guidance document in a first format; translating the guidance document into a second format, the second format being different from the first format; and dividing the reformatted guidance document into the guidance document chunks.

The operations can further include identifying a plurality of similar guidance document chunks, from the guidance document chunks stored in the database system, for which the similarity scores meet or exceed the predefined similarity threshold; ranking the plurality of similar guidance document chunks by similarity score; and selecting the set of similar guidance document chunks, from the plurality of similar guidance document chunks, based on their ranks meeting or exceeding a predefined rank threshold.

The predefined similarity threshold may be a first predefined similarity threshold, and the operations may further include: selecting a suggested improvement from among the set of suggested improvements; generating a suggested improvement embedding for the suggested improvement using a trained embedding model; determining a guidance document from which the suggested improvement was derived by the trained large language model; determining a guidance document embedding for the guidance document; generating a similarity score indicating a similarity between the suggested improvement embedding and the guidance document embedding; determining whether the similarity score meets or exceeds a second predefined similarity threshold; in response to determining that the similarity score is below the second predefined similarity threshold, removing the suggested improvement from the set of suggested improvements to produce a validated set of suggested improvements; and selecting the one or more suggested improvements to display to the user from the validated set of suggested improvements.

The operations can further include storing suggested improvements that have previously received negative feedback, along with the negative feedback.

The predefined similarity threshold may be a first predefined similarity threshold, and the operations may further include: selecting a suggested improvement from among the set of suggested improvements; generating a similarity score indicating a similarity between the suggested improvement and a prior suggested improvement output by the trained large language model, wherein the prior suggested improvement previously received negative feedback from one or more users; determining whether the similarity score meets or exceeds a second predefined similarity threshold; in response to determining that the similarity score is meets or exceeds the second predefined similarity threshold, removing the suggested improvement from the set of suggested improvements to produce a refined set of suggested improvements; and selecting the one or more suggested improvements to display to the user from the refined set of suggested improvements.

The operations can further include receiving, via the graphical user interface, feedback from the user about a suggested improvement of the one or more suggested improvements; generating a textual description of the feedback; and storing the textual description of the feedback in relation to the suggested improvement in the database system.

The merged guidance chunk may include the set of similar guidance document chunks concatenated into a single text string, wherein each pair of adjacent guidance document chunks in the single text string are separated from one another by a delimiter containing metadata about one of the adjacent guidance document chunks.

The similarity score may include one or more of: a cosine similarity, a Euclidean distance, a Manhattan distance, or a Chebyshev distance.

The operations can further include providing a document identification along with the suggested improvements, the document identification corresponding to the guidance document chunk used to derive the one or more suggested improvements.

The operations can further include assigning severities to the one or more suggested improvements.

The guidance document chunks may be of substantially equal size to one another.

### Brief Description of the Drawings

FIG. 1 shows a block diagram of an example of a system for implementing AI guidance for document drafting according to some aspects of the present disclosure.
FIG. 2 shows an example of a process for processing guidance documents according to some aspects of the present disclosure.
FIG. 3 shows an example of a process for processing an input document according to some aspects of the present disclosure.
FIG. 4 shows an example of a process for LLM prompt generation and execution according to some aspects of the present disclosure.
FIG. 5 shows an example of a process for suggestion validation according to some aspects of the present disclosure.
FIG. 6 shows an example of a process for removing poor suggestions according to some aspects of the present disclosure.
FIG. 7 shows an example of a process for presenting suggestions to a user and obtaining feedback from the user about the suggestions according to some aspects of the present disclosure.
FIG. 8 shows a flowchart of an example of a process for providing AI guidance for document drafting according to some aspects of the present disclosure.
FIG. 9 shows an example of a graphical user interface according to some aspects of the present disclosure.
FIG. 10 shows a block diagram of an example of a computing device for implementing some aspects of the present disclosure.

### Detailed Description

Certain aspects and features of the present disclosure relate to AI-based guidance software for document drafting. The AI-based software can provide guidance in the form of suggestions about how to improve portions of the document to the user during the drafting process. The AI-based software can leverage a trained large language model (LLM) to make the suggestions. In some examples, the guidance can be output in real time to the user in document editing software, so that the user can make any desired updates to the document in light of the guidance. For example, within the document editing software, the guidance can be output in a sidebar positioned adjacent to an editor window containing the document text, or elsewhere, so that the guidance and the document text can be viewed simultaneously. The user can then view the guidance and make changes to the document on-the-fly.

Recently, LLMs have surged in popularity and are being leveraged in a large variety of ways. However, LLMs are typically trained on an extensive corpus of generalized training data, which often renders them inadequate for domain-specific tasks. For instance, when tasked with reviewing a legal contract and providing legal and/or regulatory guidance, an LLM may struggle to deliver accurate and reliable suggestions. The generalized nature of their training means that LLMs frequently lack the contextual understanding and background information necessary to discern and prioritize the most pertinent information for making precise recommendations on specific, nuanced topics. Consequently, LLMs can produce suboptimal suggestions or even hallucinations-outputs that are factually incorrect or nonsensical. These limitations have made developers hesitant to use LLMs for specialized applications, despite their many advantages. Due to these challenges, many developers instead prefer to use domain-specific models that are specifically designed, trained, and tuned for a specific application, despite the widespread availability of pre-trained LLMs. But these domain-specific models are difficult and time consuming to create, require a large corpus of specific training data that can be hard to acquire, and have less flexibility as compared to an LLM.

The present disclosure can overcome one or more of the abovementioned problems by providing a specialized pipeline that allows an LLM to be used to generate accurate guidance for improving an input document. The pipeline can employ guidance documents, similarity scoring, prompt engineering, and other features to help guide the outputs of the LLM. By applying the pre-processing, prompt engineering, post-processing, and other aspects of the pipeline, the system can produce accurate suggestions for improving the input document. The user can then provide feedback about the suggestions, which can be used to improve subsequent suggestions generated for the same input document or a different input document. Through the combination of processes described herein, an LLM (e.g., a generic off-the-shelf LLM) may be used to provide accurate suggestions for improving an input document, where normally a specialized model may instead be required.

More specifically, a significant technical problem in the application of large language models (LLMs) to document drafting tasks, particularly in specialized or highly regulated domains, is the inability of generalized LLMs to reliably produce accurate, contextually appropriate, and domain-specific suggestions without extensive retraining or manual curation of outputs. General-purpose LLMs, by virtue of their broad and nonspecific training data, often lack both the nuanced contextual understanding and the precision necessary to distinguish between subtle domain-specific requirements (e.g., legal, regulatory, or compliance standards) resulting in a high incidence of irrelevant, incorrect, or even hallucinated outputs. The traditional approach to mitigating this problem is to develop and maintain bespoke domain-specific models, which are costly, inflexible, and data-intensive. The present disclosure addresses these technical challenges by introducing a novel pipeline that leverages vectorized semantic similarity scoring and structured prompt engineering to dynamically constrain and inform the generative outputs of an LLM. By systematically embedding input document segments and/or curated guidance document segments into a shared vector space, and then algorithmically selecting only those guidance chunks with high semantic similarity to the input, the system constructs contextually relevant, domain-specific prompts for the LLM. This targeted guidance can effectively transform a general-purpose LLM into a domain-adaptive system, without needing to retrain the LLM, by injecting highly relevant, pre-filtered reference material into the model's prompt. As a result, the techniques described herein can solve the technical problem of LLMs' lack of domain specificity, reduce the risk of hallucinations, and improve the precision, reliability, and scalability of automated document drafting guidance in specialized fields.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

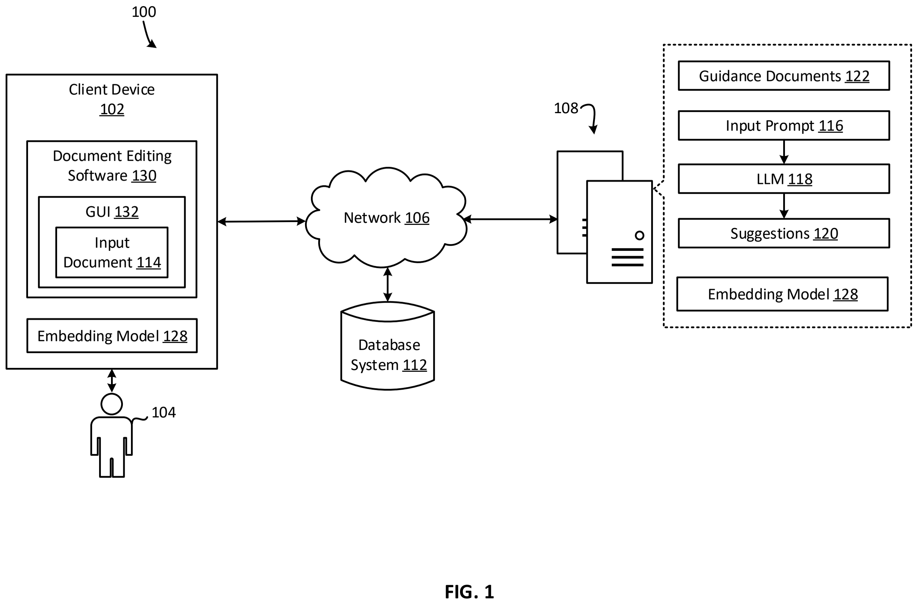

FIG. 1 shows a block diagram of an example of a system 100 for implementing AI guidance for document drafting according to some aspects of the present disclosure. The system 100 includes a client device 102, such as a laptop computer, desktop computer, tablet, smartphone, smart watch, or e-reader. The client device 102 may display a graphical user interface 132 through which a user 104 can draft, import, or otherwise provide an input document 114. As used herein, the term "input document" can refer to any textual content in any format. Thus, the term "input document" is not intended to be limited to only conventional document formats. For example, the input document 114 may be a complete text document (e.g., a word processing file, PDF, or similar), a portion thereof, or a discrete text excerpt. As another example, the input document 114 may be a shorter text such as a social media post, blog entry, email message, or other text-based communication.

In some examples, the graphical user interface 132 can be part of document editing software 130, such as word processing software or a text editor. The user 104 may interact with the document editing software 130 to add new content to the input document 114, remove existing content from the input document 114, and/or modify the existing content of the input document 114.

The client device 102 may communicate with a server system 108 via one or more networks. The one or more networks can include a private network, such as a local area network (LAN), or a public network, such as the Internet. The server system 108 can include any number and combination of servers, desktop computers, etc. In some examples, the server system 108 may be a cloud computing system. The server system 108 may be coupled to or capable of accessing a database system 112, which can include any number and combination of databases.

To provide the suggestions described above for improving an input document 114, the system 100 can implement a pipeline. The pipeline can generally begin with processing one or more guidance documents 122. In some examples, dozens or hundreds of guidance documents may be processed by the system 100. The guidance documents 122 can be processed by the system 100 before an input document 114 is received. Although the system 100 includes an LLM 118, as explained later, the system 100 can process the guidance documents 122 independently of the LLM 118 for the purpose of creating an input prompt 116 for the LLM 118.

A guidance document 122 can refer to any textual content in any format from which guidance can be derived for how to improve an input document 114. Thus, the term "guidance document" is not intended to be limited to only conventional document formats. For example, the guidance document 122 may be a complete text document (e.g., a word processing file, PDF, or similar), a portion thereof, or a discrete text excerpt. As another example, the guidance document 122 may be a shorter text such as a social media post, blog entry, email message, or other text-based communication. As one specific example, a guidance document 122 may be a legal contract drafted by a reputable attorney. Such a legal contract can serve as a benchmark or an example from which guidance can be derived for improving an input document 114, which may also be a legal contract drafted by the user 104 or another person. As another example, the guidance document 122 may describe rules, laws, regulations, or protocols from which the guidance can be derived for improving an input document 114.

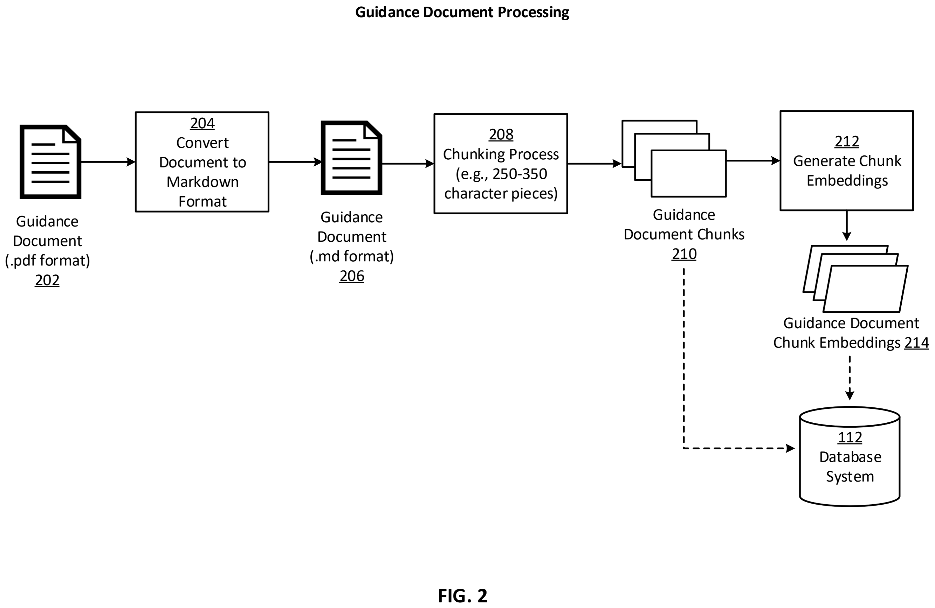

In some examples, the system 100 can process the one or more guidance documents 122 by performing the operations shown in FIG. 2. Those operations may be implemented by the client device 102, the server system 108, or a combination thereof. In other examples, the process may include more operations, fewer operations, different operations, or sequences of operations than is shown in FIGS. 2.

Referring now to FIG. 2, as shown, the system 100 can receive a guidance document 202 from any suitable source, such as the user 104 or a repository. For example, the user 104 may upload the guidance document 202 to the system 100. The guidance document 202 may be in a first format, such as a portable document format (PDF).

In some examples, at block 204, the system 100 may reformat (e.g., translate) the guidance document 202 into a second format, the second format being different from the first format. For example, the server system 108 can receive the guidance document 202 and convert it into a markdown format, thereby producing a reformatted guidance document 206. Reformatting the guidance document 202 may make it easier to handle in the rest of the process.

In block 208, the system 100 executes a chunking process. For example, the server system 108 can execute the chunking process. During the chunking process, the guidance document (e.g., the original guidance document 202 or the reformatted guidance document 206) is divided into chunks, referred to herein as guidance document chunks 210. A guidance document chunk 210 is a continuous segment of the guidance document. In some examples, if a chunk 210 is part of a specific section of the guidance document, the section header may also be included in the chunk to help preserve context. The guidance document chunks 210 may be of equal size or substantially equal size to one another. In some examples, a guidance document chunk 210 can be 250-350 characters in size.

At block 212, the system 100 generates embeddings 214 for the guidance document chunks. For example, the server system 108 can generate the embeddings 214 for the guidance document chunks. The embeddings of the guidance document chunks are referred to herein as guidance document chunk embeddings 214. A guidance document chunk embedding may be in the form of a vector of numerical values, which can represent the guidance document chunk's characteristics.

The system 100 can use an embedding model 128 to generate the guidance document chunk embeddings 214. For example, the client device 102 or the server system 108 can input each guidance document chunk into the embedding model 128. Based on the guidance document chunk, the embedding model 128 can output a corresponding embedding 214 for the guidance document chunk. In some examples, the embedding model 128 can be a multilingual embedding model and the guidance document chunk embeddings 214 can be multilingual embeddings. Examples of the embedding model 128 can include Word2Vec, Doc2Vec, Global Vectors for Word Representation (GloVe), FastText, Embeddings from Language Models (ELMo), and Bidirectional Encoder Representations from Transformers (BERT).

After generating the guidance document chunk embeddings 214, in some examples the system 100 can store the guidance document chunk embeddings 214 in a database system 112. The system 100 can also store the guidance document chunks 210 themselves in the database system 112. Each of the guidance document chunks 210 can be mapped to its corresponding embedding 214 in the database system 112. The guidance document chunks 210 and their embeddings 214 can be used later to generate suggestions for an input document 114.

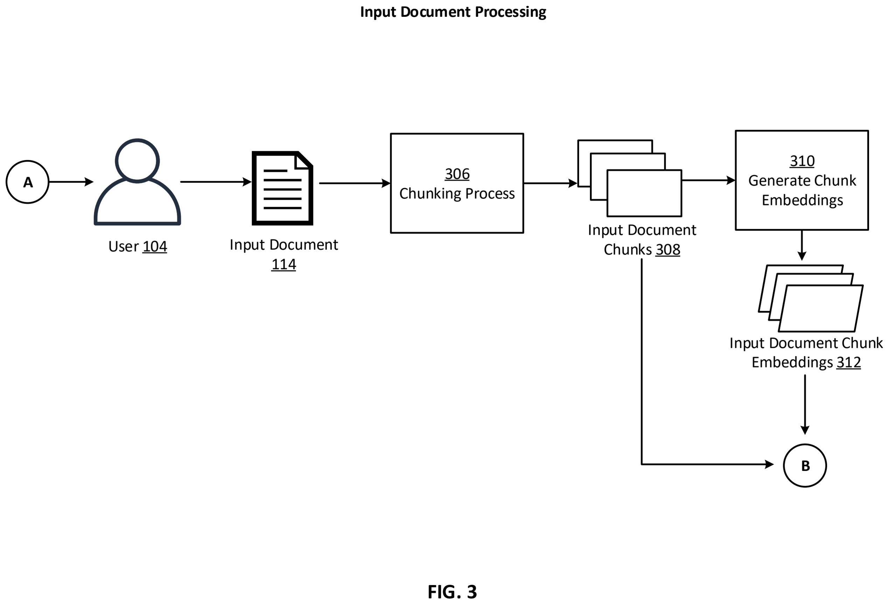

With the guidance documents processed, the system 100 may now be capable of processing an input document 114 and providing suggestions 120 for its improvement. To do so, the system 100 may perform the operations shown in FIGS. 3-7. Those operations may be implemented by the client device 102, the server system 108, or a combination thereof. In other examples, the system 100 may perform more operations, fewer operations, different operations, or difference sequences of operations than are shown in FIGS. 3-7.

Referring now to FIG. 3, the system 100 can begin by receiving the input document 114 from the user 104 or another source, such as a database. For instance, the user 104 can draft the input document in the document editing software 130 that is executing on the client device 102. Alternatively, the user 104 can upload or import a pre-drafted input document for processing by the system 100.

Next, at block 306, the system 100 can implement a chunking process in which the input document 114 is divided into chunks, referred to herein as input document chunks 308. For example, the client device 102 or the server system 108 can execute the chunking process to generate the input document chunks 308. An input document chunk 308 is a continuous segment of the input document. In some examples, if a chunk 308 is part of a specific section of the input document 114, the section header may also be included in the chunk 308 to help preserve context. The input document chunks 308 may be of equal size or substantially equal size to one another. The size of an input document chunk 308 may be 250-350 characters, in some examples.

At block 310, the system 100 generates embeddings 312 for the input document chunks. The embeddings of the input document chunks are referred to herein as input document chunk embeddings 314. An input document chunk embedding may be in the form of a vector of numerical values, which can represent the input document chunk's characteristics. In some examples, the embedding model 128 can be a multilingual embedding model and the input document chunk embeddings 314 can be multilingual embeddings.

The system 100 can use an embedding model 128 to generate the input document chunk embeddings 312. For example, the client device 102 can use the embedding model 128 to generate the input document chunk embeddings 312. The client device 102 may then transmit the input document chunk embeddings 312 to the server system 108 for further processing. Alternatively, the server system 108 can use the embedding model 128 to generate the input document chunk embeddings 312 based on the input document chunks 308.

To generate the input document chunk embeddings 312, in some examples the system 100 can input each of the input document chunks 308 into the embedding model 128. In response, the embedding model 128 can output a corresponding embedding 312 for the input document chunk.

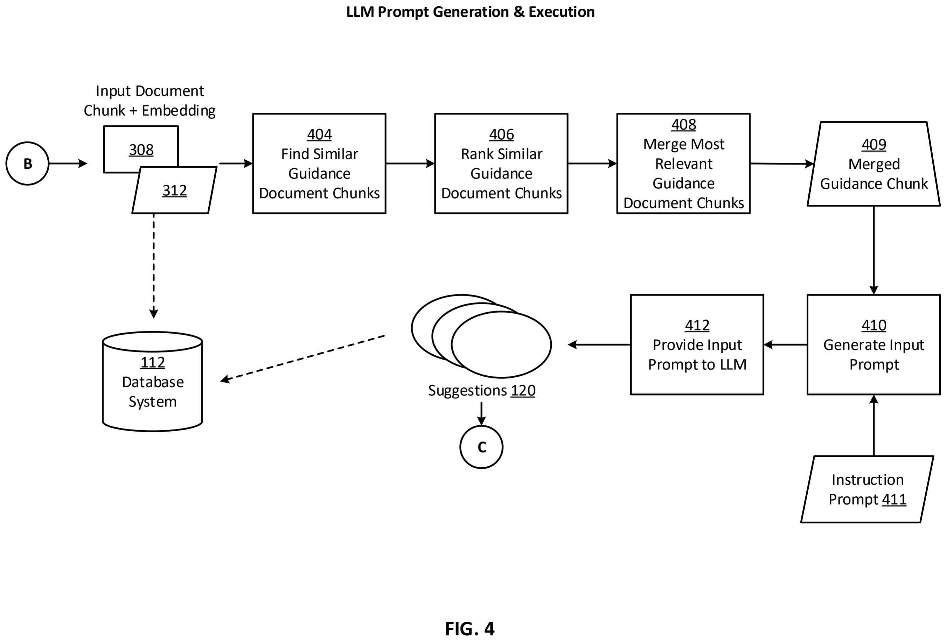

After generating the input document chunks 308 and input document chunk embeddings 312, the system 100 can proceed to execute one or more of the processes shown in FIGS. 4-7. Those process can be used to independently evaluate each of the input document chunks 308 and provide corresponding suggestions. Thus, the processes shown in FIGS. 4-7 can be iterated for each of the input document chunks 308.

Referring now to FIG. 4, the system 100 receives an input document chunk 308 and its corresponding embedding 312. For example, the server system 108 can receive the input document chunk 308 and its corresponding embedding 312 from the client device 102, which may have performed some or all of the operations of FIG. 3. The server system 108 can receive the input document chunk 308 and its corresponding embedding 312 from the client device 102 over the one or more networks 106. The system 100 may store the input document chunk 308 and/or its corresponding embedding 312 in the database system 112. For example, the input document chunk 308 may be mapped to its corresponding embedding 312 in the database system 112.

At block 404, the system 100 determines one or more guidance document chunks 210 that are similar to the input document chunk 308. To do so, in some examples, the system 100 can compare the input document chunk embedding 312 to each of the guidance document chunk embeddings 214 stored in the database system 112. Each such comparison may involve computing a similarity score indicating the similarity between the input document chunk embedding 312 and the guidance document chunk embedding 214. In some examples, the similarity score may be a cosine similarity, Euclidean distance, Manhattan distance, or a Chebyshev distance. The system 100 can then compare the similarity scores for the guidance document chunk embeddings 214 to a predefined similarity threshold. Guidance document chunk embeddings 214 that have similarity scores that meet or exceed the predefined similarity threshold may be deemed "similar" to the input document chunk 308.

At block 406, the system 100 ranks the similar guidance document chunks by their similarity scores. The top-K (e.g., five or ten) scoring chunks may be selected for subsequent operations. Alternatively, this operation may be skipped, for example if the similarity threshold is set high enough in block 404 such that only the top-K scoring chunks result. The top-K scoring chunks can be considered the most-relevant guidance document chunks.

At block 408, the system 100 combines the similar guidance document chunks (e.g., the most-relevant guidance document chunks) together into a merged guidance chunk 409. For example, the system 100 can concatenate the guidance document chunks together into a single text string, which serves as the merged guidance chunk 409.

In some examples, metadata about each guidance document chunk can also be included in the merged guidance chunk 409. Examples of the metadata can include a Document ID that uniquely identifies the guidance document from which guidance document chunk was derived, a length of the guidance document chunk, etc. In some examples, the metadata can serve as a delimiter between adjacent chunks in the merged guidance chunk 409. As one particular example, the merged guidance chunk 409 may be arranged as follows: {md_chunk1} chunk1_content {md_chunk2} chunk2_content {md_chunk3} chunk3_content.... In that example, {md_chunkN} represents the metadata for chunk N, and chunkN_content represents the text content of chunk N.

At block 410, the system 100 generates an input prompt 116 for a large language model (LLM) 118. The system 100 can generate the input prompt 116 based on the merged guidance chunk 409, the input document chunk 308, and/or a predefined instruction prompt 411. For example, the system 100 can configure the input prompt 116 to include the merged guidance chunk 409, the input document chunk 308, and the predefined instruction prompt 411. The predefined instruction prompt 411 can include rules that control how the LLM 118 analyzes the merged guidance chunk 409 and the input document chunk 308, the type and format of the output from the LLM 118, and other functional settings. In some examples, the predefined instruction prompt 411 can include template language with empty fields into which the merged guidance chunk 409 and/or the input document chunk 308 are to be inserted. As one particular example, the predefined instruction prompt 411 may be the following:
Determine one or more suggested improvements that can be made to the following input based on the following reference content, and output the suggested improvements in JSON format.
Input: [input document chunk content].
Reference content: [merged guidance chunk content].

At block 412, the system 100 provides the input prompt 116 as input to the LLM 118. The LLM 118 may have previously been trained on a large corpus of information. Based on receiving the input prompt 116, the LLM 118 can generate one or more suggested improvements 120, which are also referred to herein as "suggestions" for simplicity. The suggestions 120 may serve as guidance to help the user 104 improve the quality of the input document chunk 308. The suggestions 120 may be legal or regulatory suggestions, formatting or spelling suggestions, etc. The suggestions 120 can be output as human-readable text snippets, such as full sentences.

In some examples, the suggestions 120 may each be output along with a Document ID corresponding to the guidance document chunk used to derive the suggestion 120. More specifically, the LLM 118 can use a guidance document chunk that is included in the input prompt 116 as the basis for generating a suggestion. The metadata for that guidance document chunk can indicate the guidance document from which the chunk was extracted. For example, the metadata for that guidance document chunk can include the Document ID that uniquely identifies the guidance document from which the chunk was extracted. That Document ID can be output in conjunction with the suggestion by the LLM 118, so that it is clear which guidance document was the source of the suggestion.

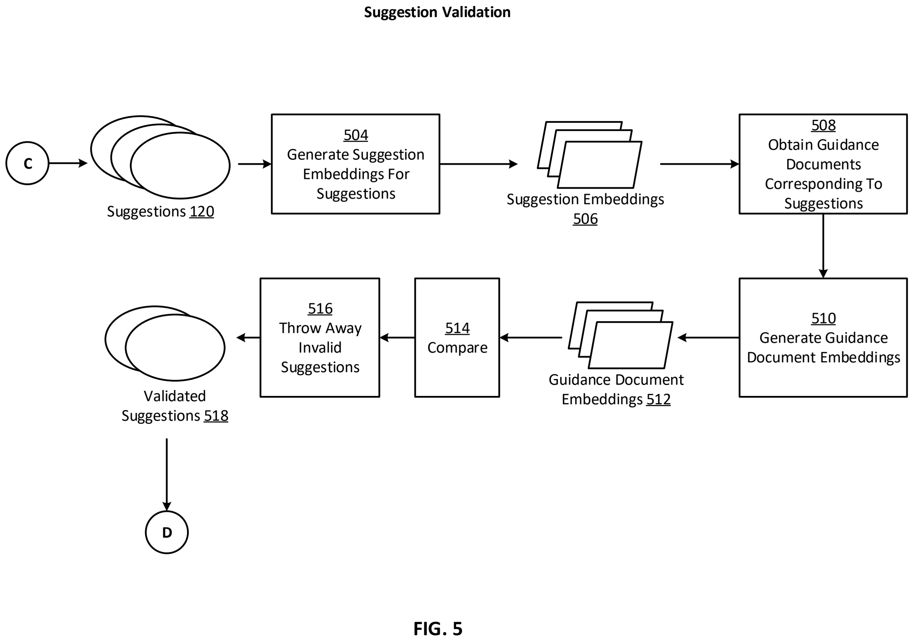

Because not all the suggestions 120 output by the LLM 118 may be good suggestions due to hallucinations and other factors, the suggestions 120 may next undergo one or more quality checks. These quality checks can serve as additional guardrails on the output of the LLM 118. Examples of those quality checks are described below with reference to FIGS. 5-6.

Referring now to FIG. 5, the system 100 receives the suggested improvements 120 generated by the LLM 118. At block 504, the system 100 generates embeddings 506 for the suggested improvements 120. The embeddings 506 of the suggested improvements 120 are referred to herein as suggested improvement embeddings. A suggested improvement embedding may be in the form of a vector of numerical values, which can represent the suggested improvement's characteristics. The system 100 can use an embedding model 128 to generate the suggested improvement embedding 506. For example, the system 100 can input each suggested improvement into the embedding model 128. Based on the suggestion, the embedding model 128 can output a corresponding embedding 506 for the suggested improvement 120.

At block 508, the system 100 obtains the guidance documents corresponding to the suggestions 120. For example, the suggestions 120 may have each been output by the LLM 118 with a corresponding Document ID that uniquely identifies the underlying guidance document from which the suggestion was derived. The system 100 can use those Document IDs to retrieve (e.g., from the database system) the guidance documents corresponding to the suggestions 120.

In block 510, the system 100 generates embeddings 512 for the guidance documents. The embeddings 512 of the guidance documents are referred to herein as guidance document embeddings. A guidance document embedding may be in the form of a vector of numerical values, which can represent the guidance document's characteristics as a whole. The system 100 can use an embedding model 128 to generate the guidance documents embeddings 512. For example, the system 100 can input each guidance document into the embedding model 128. Based on the guidance document, the embedding model 128 can output a corresponding embedding 512 for the guidance document.

In block 514, the system 100 compares each suggested improvement embedding 506 against its corresponding guidance document embedding 512. Each such comparison may involve computing a similarity score that indicates the similarity between suggested improvement embedding 506 and the guidance document embedding 512. In some examples, the similarity score may be a cosine similarity, Euclidean distance, Manhattan distance, or a Chebyshev distance. If the similarity score for a {suggested improvement embedding, guidance document embedding} pair meets or exceeds a predefined similarity threshold, the suggestion 120 may be considered valid, because the suggestion 120 is sufficiently similar to the guidance document from which it was derived. Otherwise, the suggestion 120 may be considered invalid, because it is too different from the guidance document from which it was derived. This process can help remove hallucinations or other anomalous suggestions generated by the LLM 118.

At block 516, the system 100 can throw away (e.g., remove) invalid suggestions such that only the valid suggestions 518 remain.

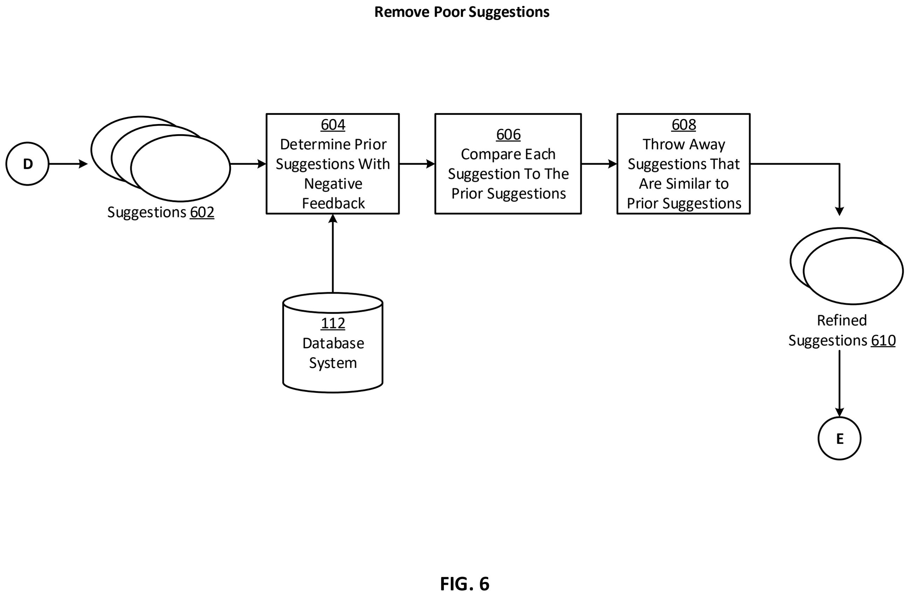

Another example of a quality check on the suggestions is shown in FIG. 6. In this example, the system 100 can begin by receiving the suggestions 602 for evaluation. The suggestions 602 may be the original suggestions 120 from the LLM 118 or the validated suggestions 518.

In block 604, the system identifies (in the database system 112) prior suggestions that have received negative feedback. Those prior suggestions may have previously been presented to one or more users and received negative feedback from those users, for example because they were bad suggestions. Such prior suggestions may be stored in a special table in the database system 112, or flagged a special way in the database system 112, to indicate that they received negative feedback. The negative feedback may also be stored in the database system 112 along with the bad suggestions.

In block 606, the system 100 compares each of the current suggestions 602 from the LLM 118 to each of the prior suggestions that received the negative feedback. Each such comparison may involve computing a similarity score indicating the similarity between a current suggestion 602 and a prior suggestion. In some examples, the similarity score may be a cosine similarity, Euclidean distance, Manhattan distance, or a Chebyshev distance. The system 100 can then compare the similarity score to a predefined similarity threshold. If a current suggestion 602 has a similarity score with respect to a prior suggestion that meets or exceeds the predefined similarity threshold, the current suggestion 602 may be deemed "similar" to the prior suggestion and thus may also be considered a "bad" suggestion.

In block 608, the system 100 can throw away (e.g., remove) some or all of the bad suggestions, because it is likely that they will also receive negative feedback.

In some examples, the system 100 can request alternatives from the LLM 118 for one or more of the bad suggestions. For instance, the system 100 may generate an input to the LLM 118 that includes a bad suggestion, the corresponding negative feedback from the prior similar suggestion, and/or an instruction to improve the bad suggestion. For example, the system 100 can generate and provide the following input prompt to the LLM 118:
Based on the following suggestion that you generated, and the following negative feedback about a previous similar suggestion, can you please improve the suggestion?
Suggestion: [insert suggestion]
Negative feedback: [insert negative feedback from previous similar suggestion]
In response, the LLM 118 may generate an alternative suggestion. In generating the alternative suggestion, the LLM can consider the negative feedback. That alternative suggestion may then undergo one or more of the quality checks of FIGS. 5-6, and the process may iterate until a suitable alternative suggestion is found.

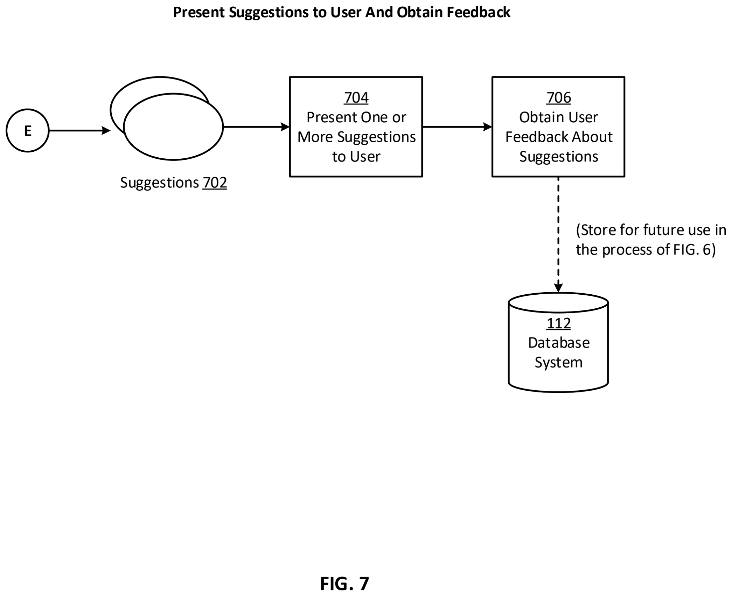

At the conclusion of this process, a refined set of suggestions 610 may remain. The system 100 may then present some or all of the refined set of suggestions 610 to the user 104 and obtain feedback about them, as explained in greater detail below with respect to FIG. 7.

Referring now to FIG. 7, at block 704, the system 100 can present one or more of the suggestions 702 to the user 104. The suggestions 702 presented to the user 104 may consist of all of the original suggestions 120 generated by the LLM 118, only the validated suggestions 518, and/or only the refined set of suggestions 610. The system 100 can present the suggestions 702 to the user 104 by outputting them in the graphical user interface 132 displayed on the client device 102. In some examples, the suggestions 702 may be positioned in the graphical user interface 132 at a location that is visually related to (e.g., visually adjacent to) the corresponding input document chunk 308.

At block 706, the system 100 can receive feedback from the user 104 about the suggestions 702. The feedback may be positive feedback, negative feedback, or neutral feedback. The feedback may be provided as a star rating, a numerical rating, a comment, a thumbs up, a thumbs down, etc. The user 104 can input the feedback by interacting with the graphical user interface 132 displayed on the client device 102. The feedback may then be stored in the database system 112. If the feedback for a suggestion 702 is negative, the suggestion 702 may be subsequently used as a "prior suggestion" in the process shown in FIG. 6 during a subsequent iteration.

In some examples, the system 100 may generate a textual description of the feedback. For example, the system 100 may generate a textual description of a thumbs down or a numerical score, such as "the user gave this suggestion a thumbs down" or "the user gave this suggestion a score of 1 out of 5, where 1 is the lowest and 5 is the highest." The system 100 may then store the textual description in place of the original feedback, or in addition to the original feedback, in the database system 112. Converting the original feedback to text may assist with the process described above with respect to FIG. 6, in which the negative feedback associated with a previous suggestion is input to the LLM 118, because it allows the LLM 118 to more fully understand the negative feedback.

By implementing the above pipeline, the system 100 can automatically and dynamically process an input document chunk, generate one or more suggested improvements to the input document chunk using an LLM 118, and validate those suggestions for quality, before providing them to the user 104 in the graphical user interface 132. The pipeline can be executed for each input document chunk to generate one or more corresponding suggestions. In some examples, the pipeline can be implemented in real time, for example as the user 104 is drafting the input document, to provide real time suggestions and feedback as the drafting phase is ongoing.

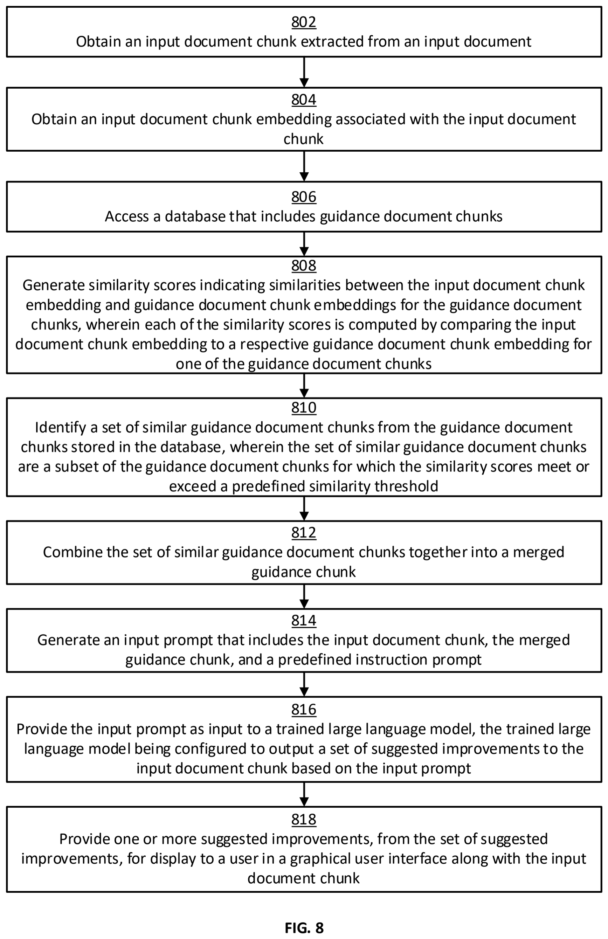

Turning now to FIG. 8, shown is a flowchart of an example of a process for providing AI guidance for document drafting according to some aspects of the present disclosure. Other examples may include more operations, fewer operations, different operations, or a different sequence of operations than is shown in FIG. 8. The operations of FIG. 8 are described below with reference to the components of FIGS. 1-7 discussed above. The operations described below may be implemented by the server system 108, the client device 102, or a combination thereof.

In block 802, the system 100 obtains an input document chunk 308. The input document chunk 308 is a chunk of content extracted from an input document 114. The input document 114 may be a text document, in which case the input document chunk 308 can be a text chunk that may contain one or more sentences. The system 100 can obtain the input document chunk 308 from any suitable source. For example, the server system 108 can obtain the input document chunk 308 from the client device 102, which may generate the input document chunk 308 by segmenting the input document 114 into chunks (e.g., of substantially equal size) and transmit the input document chunk 308 to the server system 108. Alternatively, the server system 108 can itself generate the input document chunk 308 by segmenting the input document 114 into chunks.

In block 804, the system 100 obtains an input document chunk embedding 312 associated with the input document chunk 308. The input document chunk embedding 312 may be generated using an embedding model 128, which can convert the input document chunk 308 into the input document chunk embedding 312. The system 100 can obtain the input document chunk embedding 312 from any suitable source. For example, the server system 108 can obtain the input document chunk embedding 312 from the client device 102, which may generate the input document chunk embedding 312 by executing the embedding model 128 and transmit the input document chunk embedding 312 to the server system 108. Alternatively, the server system 108 can itself generate the input document chunk embedding 312 by executing the embedding model 128.

In block 806, the system 100 accesses a database system 112 that includes guidance document chunks 210. The guidance document chunks 210 are segments of content extracted from one or more guidance documents. A guidance document can be a text document, in which case the guidance document chunks 210 can be text chunks that may contain one or more sentences. The guidance document chunks 210 may have been previously derived from the one or more guidance documents, prior to obtaining the input document chunk 308.

In block 808, the system 100 generates similarity scores indicating similarities between the input document chunk embedding 312 and guidance document chunk embeddings 214 for the guidance document chunks 210. Each of the similarity scores is computed by comparing the input document chunk embedding 312 to a respective one of the guidance document chunk embeddings 214 for a corresponding one of the guidance document chunks 210. For example, for a given guidance document chunk embedding 214, the system 100 may generate a cosine similarity or Euclidean distance that serves as the similarity score.

In block 810, the system 100 identifies a set of similar guidance document chunks from the guidance document chunks 210 stored in the database system 112. The similar guidance document chunks are a subset of the guidance document chunks 210 for which the corresponding similarity scores met or exceed a predefined similarity threshold. For example, if a first guidance document chunk has an associated similarity score of 94, and a second guidance document chunk has an associated similarity score of 26, the first guidance document chunk may be considered similar to the input document chunk 308 because its corresponding similarity score exceeds the similarity threshold of 75, while the second guidance document chunk may be considered dissimilar to the input document chunk 308 because its corresponding similarity score is below the similarity threshold of 75.

In block 812, the system 100 combines the set of similar guidance document chunks together into a merged guidance chunk 409. This may involve combining the set of similar guidance documents together into a single text string. In some examples, there may be delimiters positioned between each adjacent pair of guidance document chunks in the merged guidance chunk 409. Such delimiters may help the LLM 118 know where each chunk starts and ends.

In block 814, the system 100 generates an input prompt 116 that includes the input document chunk 308, the merged guidance chunk 409, and a predefined instruction prompt 411. In some examples, this may involve the system 100 inserting the input document chunk 308 and/or the merged guidance chunk 409 into corresponding fields of the predefined instruction prompt 411.

In block 816, the system 100 provides the input prompt 116 to a trained LLM 118, which is configured to output a set of suggested improvements 120 to the input document chunk 308 based on the input prompt 116.

In block 818, the system 100 provides one or more suggested improvements, from the set of suggested improvements 120, for display to a user 104 in a graphical user interface 132. In some examples, the one or more suggested improvements may be validated suggestions 518 generated through the process shown in FIG. 5. Additionally or alternatively, the one or more suggested improvements may be refined suggestions 610 generated through the process shown in FIG. 6.

In some examples, the one or more suggestions can include compliance suggestions, such as ways to improve the phrasing in an input document chunk to better comply with legal or regulatory requirements. Additionally or alternatively, the one or more suggestions can include spelling suggestions, grammar suggestions, formatting suggestions, etc.

In some examples, the system 100 may output the input document chunk 308 in the graphical user interface 132 concurrently with the corresponding suggested improvements. For instance, the input document chunk 308 may be output in a first area of the graphical user interface 132, and the one or more suggested improvements may be output in a second area of the graphical user interface 132, where the first area may be adjacent to the second area in the graphical user interface 132. Additionally or alternatively, the one or more suggested improvements may be output in a tooltip, a popup window, or another graphical element of the graphical user interface 132.

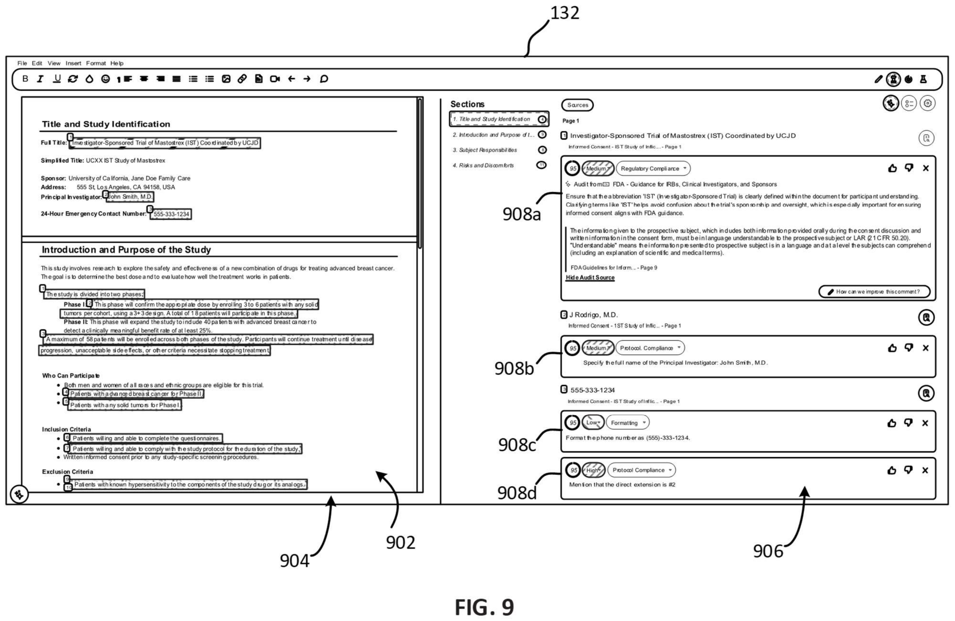

One example of such a graphical user interface 132 is shown in FIG. 9. As shown, the graphical user interface 132 includes the content of the input document 902 in a first area 904 (e.g., a first frame) of the graphical user interface 132. The graphical user interface 132 also includes suggestion elements 908a-d in a second area 906 (e.g., a second frame) of the graphical user interface 132. Each of the suggestion elements 908a-d can include a respective suggestion for a corresponding chunk of the input document 902. In some examples, the system can assign importances/severities to the suggestions. For example, suggestion elements 908a-b are designated medium importance, suggestion element 908c is designated low importance, and suggestion element 908d is designated high importance. In some examples, the underlying chunk of the guidance document from which a suggestion was derived may also be output in the graphical user interface 132. For instance, suggestion element 908a has both the suggestion itself (at the top) and the relevant chunk of the underlying guidance document (at the bottom) that inspired the suggestion. It will be appreciated that FIG. 9 is intended to be illustrative and non-limiting. Other examples can include more, fewer, different, or a different configuration of graphical elements than is shown in FIG. 9.

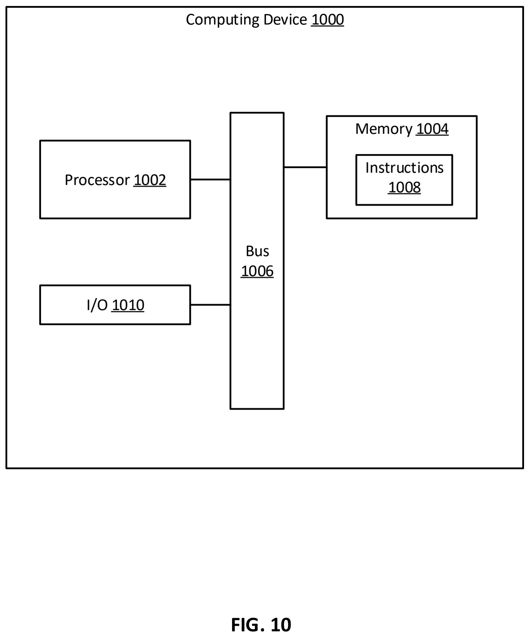

Turning now to FIG. 10, shown is a block diagram of an example of a computing device 1000 for implementing some aspects of the present disclosure. In some examples, the computing device 1000 may correspond to the server system 108 or the client device 102 of FIG. 1. The computing device 1000 may be used to implement the processes of FIGS. 1-8.

The computing device 1000 includes a processor 1002 communicatively coupled to a memory 1004 by a bus 1006. The processor 1002 can include one processor or multiple processors. Examples of the processor 1002 can include a Field-Programmable Gate Array (FPGA), an application-specific integrated circuit (ASIC), or a microprocessor. The processor 1002 can execute instructions 1008 stored in the memory 1004 to perform operations. The instructions 1008 may include processor-specific instructions generated by a compiler or an interpreter from code written in any suitable computer-programming language, such as C, C++, C#, Java, or Python.

The memory 1004 can include one memory device or multiple memory devices. The memory 1004 can be volatile or non-volatile (e.g., it can retain stored information when powered off). Examples of the memory 1004 include electrically erasable and programmable read-only memory (EEPROM), flash memory, or cache memory. At least some of the memory 1004 includes a non-transitory computer-readable medium from which the processor 1002 can read instructions 1008. A computer-readable medium can include electronic, optical, magnetic, or other storage devices capable of providing the processor 1002 with the instructions 1008 or other program code. Examples of a computer-readable mediums include magnetic disks, memory chips, ROM, random-access memory (RAM), an ASIC, a configured processor, and optical storage.

The computing device 1000 can also include input/output components 1010. Examples of input components can include a mouse, a keyboard, a touchpad, a touch-screen display, or a sensor, such as a global positioning system (GPS) unit, a gyroscope, an accelerometer, an inclinometer, or a camera. Examples of output components can include a visual display such as a liquid crystal display (LCD) or a light-emitting diode (LED) display, an audio display such as a speaker, or a haptic display such as a haptic actuator.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A method comprising:
obtaining, by one or more processors, an input document chunk embedding associated with an input document chunk;
accessing, by the one or more processors, a database system that includes guidance document chunks;
generating, by the one or more processors, similarity scores indicating similarities between the input document chunk embedding and guidance document chunk embeddings for the guidance document chunks, wherein each of the similarity scores is computed by comparing the input document chunk embedding to a respective guidance document chunk embedding for one of the guidance document chunks;
identifying, by the one or more processors, a set of similar guidance document chunks from the guidance document chunks stored in the database system, wherein the set of similar guidance document chunks are a subset of the guidance document chunks for which the similarity scores meet or exceed a predefined similarity threshold;
combining, by the one or more processors, the set of similar guidance document chunks together into a merged guidance chunk;
generating, by the one or more processors, an input prompt that includes the input document chunk, the merged guidance chunk, and a predefined instruction prompt;
providing, by the one or more processors, the input prompt as input to a trained large language model, the trained large language model being configured to output a set of suggested improvements to the input document chunk based on the input prompt; and
providing, by the one or more processors, one or more suggested improvements, from the set of suggested improvements, for display to a user in a graphical user interface along with the input document chunk.

2. The method of claim 1, further comprising:
receiving a guidance document;
dividing the guidance document into the guidance document chunks, wherein each of the guidance document chunks is of a predefined size;
for each of the guidance document chunks, generating the respective guidance document chunk embedding using a trained embedding model; and
storing the respective guidance document chunk embedding for each of the guidance document chunks in the database system.

3. The method of claim 1 or claim 2, further comprising:
receiving a guidance document in a first format;
translating the guidance document into a second format, the second format being different from the first format; and
dividing the reformatted guidance document into the guidance document chunks.

4. The method of any preceding claim, further comprising:
identifying a plurality of similar guidance document chunks, from the guidance document chunks stored in the database system, for which the similarity scores meet or exceed the predefined similarity threshold;
ranking the plurality of similar guidance document chunks by similarity score; and
selecting the set of similar guidance document chunks, from the plurality of similar guidance document chunks, based on their ranks meeting or exceeding a predefined rank threshold.

5. The method of any preceding claim, wherein the predefined similarity threshold is a first predefined similarity threshold, and further comprising:
selecting a suggested improvement from among the set of suggested improvements;
generating a suggested improvement embedding for the suggested improvement using a trained embedding model;
determining a guidance document from which the suggested improvement was derived by the trained large language model;
determining a guidance document embedding for the guidance document;
generating a similarity score indicating a similarity between the suggested improvement embedding and the guidance document embedding;
determining whether the similarity score meets or exceeds a second predefined similarity threshold;
in response to determining that the similarity score is below the second predefined similarity threshold, removing the suggested improvement from the set of suggested improvements to produce a validated set of suggested improvements; and
selecting the one or more suggested improvements to display to the user from the validated set of suggested improvements.

6. The method of any preceding claim, the method further comprising storing suggested improvements that have previously received negative feedback, along with the negative feedback.

7. The method of claim 6 when dependent on any of claims 1 to 4, wherein the predefined similarity threshold is a first predefined similarity threshold, the method further comprising:
selecting a suggested improvement from among the set of suggested improvements;
generating a similarity score indicating a similarity between the suggested improvement and a prior suggested improvement output by the trained large language model, wherein the prior suggested improvement has previously received negative feedback from one or more users;
determining whether the similarity score meets or exceeds a second predefined similarity threshold;
in response to determining that the similarity score meets or exceeds the second predefined similarity threshold, removing the suggested improvement from the set of suggested improvements to produce a refined set of suggested improvements; and
selecting the one or more suggested improvements to display to the user from the refined set of suggested improvements.

8. The method of any preceding claim, further comprising:
receiving, via the graphical user interface, feedback from the user about a suggested improvement of the one or more suggested improvements;
generating a textual description of the feedback; and
storing the textual description of the feedback in relation to the suggested improvement in the database system.

9. The method of any preceding claim, wherein the merged guidance chunk comprises the set of similar guidance document chunks concatenated into a single text string, wherein each pair of adjacent guidance document chunks in the single text string are separated from one another by a delimiter containing metadata about one of the adjacent guidance document chunks.

10. The method of any preceding claim, wherein the similarity score comprises one or more of: a cosine similarity, a Euclidean distance, a Manhattan distance, or a Chebyshev distance.

11. The method of any preceding claim, the method further comprising providing a document identification along with the suggested improvements, the document identification corresponding to the guidance document chunk used to derive the one or more suggested improvements.

12. The method of any preceding claim, the method further comprising assigning severities to the one or more suggested improvements.

13. The method of any preceding claim, wherein the guidance document chunks are of substantially equal size to one another.

14. A non-transitory computer-readable medium comprising program code that is executable by one or more processors for causing the one or more processors to perform the method of any preceding claim.

15. A system comprising:
one or more processors; and
one or more memories storing instructions that are executable by the one or more processors for causing the one or more processors to perform the method of any of claims 1 to 13.
